# EUROPEAN PATENT APPLICATION

(11) **EP 1 847 444 A1**
(43) Date of publication of application: **24.10.2007**
(21) Application number: 06425270.3
(22) Date of filing: 19.04.2006
(51) Int. Cl.: B62D 15/02

(54) **Method and device for assisting the driver in setting the steering angle during a manoevre for parking a vehicle**

(71) Applicant: C.R.F. SOCIETA' CONSORTILE PER AZIONI, 10043 Orbassano (Torino) (IT)
(72) Inventor: Chinu, Angela, 10043 Orbassano (IT); Murdocco, Vincenzo, 10043 Orbassano (IT); Burzio, Gianfranco, 10043 Orbassano (IT); Gallione, Alessandro, 10043 Orbassano (IT); Miglietta, Maurizio, 10043 Orbassano (IT)
(74) Representative: Cerbaro, Elena

(57) **Abstract**

Described herein is a device (1) for assisting the driver during a manoeuvre for parking a vehicle in a given parking area, in which a device is provided for controlling steering (2), designed to enable the driver to control the steering angle of the vehicle; a processing unit (4), designed to determine the real path of the vehicle during the parking manoeuvre controlled manually by the driver, and to calculate at least one ideal path indicating an optimal parking manoeuvre of the vehicle in the parking area; and a feedback device (9), designed to generate, as a function of the deviation of the real path from the ideal path, a signal that transmits to the driver a physical feedback that informs him on the correctness of the parking manoeuvre in progress.

## Description

The present invention relates to a method and a device for assisting the driver in setting the steering angle during a manoeuvre for parking a vehicle.

In particular, the present invention relates to a method and to a device that are able to assist a driver when parking a vehicle, in particular a road vehicle, such as, for example, a lorry or an automobile, to which the ensuing treatment will make explicit reference, without this implying any loss in generality.

As is known, some of the latest-generation motor vehicles are provided with an automatic-control system, which is able to assist the driver during the operations for parking the vehicle in such a way as to simplify for the driver himself execution of a correct positioning of the vehicle within a parking area.

The automatic-control systems installed on board vehicles referred to above can currently be divided into two main categories according to the mode of control set by the various members that enable the driver manual control of the vehicle. The first category is represented by completely automatic systems, which govern the entire parking manoeuvre without the aid of any manual intervention on the part of the driver. In particular, said systems perform the entire manoeuvre for parking the vehicle within the parking area, controlling, instant by instant, the steering angle of the steering wheel and actuating at the same time the brake pedal and the accelerator pedal.

A second category is, instead, represented by the so-called "semiautomatic" control systems, which perform the parking manoeuvre by controlling just the steering angle of the steering wheel and requiring a manual intervention on the accelerator pedal or on the brake pedal by the driver.

It may moreover be noted that the constructional complexity and the high costs of construction of the aforesaid control systems have represented up to the present day a major obstacle for automobile manufacturers in so far as it has limited the use of said systems only in the so-called high-range motor vehicles, the costs of which are affected to a negligible extent by the installation of said systems, preventing, however, their diffusion also into the market of motor vehicles of a medium-to-low range.

In fact, the use of the aforesaid systems in a motor vehicle of a medium-to-low range has a marked incidence on its final price, consequently rendering it far from competitive on the market and hence discouraging its diffusion.

However, in the last few years the need has arisen amongst users of motor vehicles of a medium-to-low range to be able to have on board the their vehicles control systems that favour and simplify parking manoeuvres for drivers.

The aim of the present invention is consequently to provide a method and a device for assisting the driver in setting the steering angle that will be simple and inexpensive and will enable an indication to be supplied to the driver regarding the incongruousness between the setting of the steering angle set manually by the driver during the manoeuvre with respect to an ideal steering angle correlated to an optimal manoeuvre.

The above aim is achieved by the present invention in so far as it relates to a device for assisting the driver, provided according to what is indicated in Claim 1 and, preferably, in any one of the subsequent claims that depend either directly or indirectly upon Claim 1.

According to the present invention a method for assisting the driver is moreover provided as indicated in Claim 12 and, preferably, in any one of the subsequent claims that depend either directly or indirectly upon Claim 12.

The present invention will now be described with reference to the annexed plate of drawings, which illustrates a nonlimiting example of embodiment thereof, and in which:
- Figure 1 is a schematic illustration of a device for assisting the driver in setting the steering angle during a manoeuvre for parking a vehicle; and
- Figure 2 shows a flowchart indicating the operations implemented by the device illustrated in Figure 1 during its operation.

The present invention is essentially based upon the principle of generating, during a manoeuvre for parking a vehicle driven by a user, a signal that will be physically perceivable by the driver preferably through the steering wheel of the vehicle in order to "prompt" him on the correctness or otherwise of the steering angle of the vehicle set during the manoeuvre.

In other words, the present invention is essentially based upon the idea of generating a resistant torque on the steering of the vehicle, which will counter the action of manual rotation of the steering wheel by the driver when said action produces steering angles not congruous with the ideal steering angles correlated to an ideal path of manoeuvre or which will favour, i.e., will not prevent, variations of the steering angle controlled by the driver, when said actions lead to steering angles that are congruous with the aforesaid ideal steering angles.

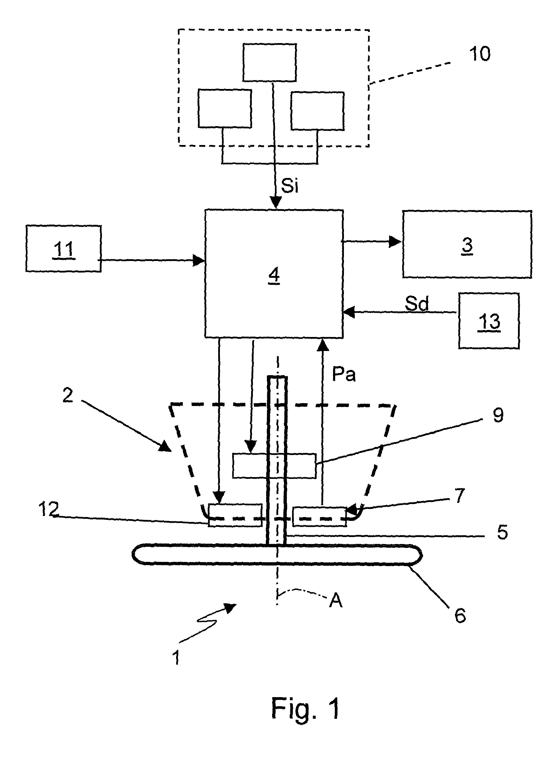

With reference to Figure 1, number 1 designated as a whole a device for assisting the driver, which can be installed on board a vehicle (not illustrated), in particular a road vehicle, in order to be able "communicate" to the driver a signal corresponding to a physical feedback that informs him on the correctness of the parking manoeuvre in progress.

In particular, the device 1 for assisting the driver is able to "prompt" the driver on the action that he has to exert on the steering wheel by favouring or countering the manual rotation of the steering wheel as a function between the discordance between the steering angle set by the driver and an ideal steering angle correlated to an optimal path of manoeuvre.

The device 1 for assisting the driver basically comprises: a control device 2, through which the driver controls a steering angle; a steering unit 3, which actuates steering of the wheels of the vehicle; and a processing unit 4, which drives the steering unit 3 according to the steering angle set, i.e., controlled, by the driver through the control device 2.

With reference to the example illustrated in Figure 1, the control device 2 comprises: a steering column 5; a steering wheel 6, which is fixedly connected to one free end of the steering column 5 and is set coaxial to the steering column 5 itself, having a longitudinal axis A; a position sensor 7, coupled to the steering wheel 6 and/or to the steering column 5 for supplying a signal Pa containing indications regarding the steering angle, and/or the direction of rotation of the steering column 5 and/or of the steering wheel 6, and/or the torque of rotation exerted by the driver on the steering wheel 6.

The control device 2 further comprises a feedback device 9 with electro-mechanical, or electro-hydraulic, actuation, which is coupled to the steering wheel 6 and/or to the steering column 5 in such a way as to be able to generate thereon, upon command, a resistant torque designed to be perceived by the driver through the steering wheel 6 during the manual action of rotation thereof.

In the case in point, the feedback device 9 is able to modulate appropriately the resistant torque generated on the steering wheel 6 or on the steering column 5 in such a way as to counter or otherwise manual rotation thereof by the driver. In greater detail, the feedback device 9 can comprise, for example, an electric motor mechanically coupled to the steering column 5 and/or to the steering wheel 6.

The device 1 for assisting the driver further comprises a detection apparatus 10, which is able to detect the presence of a useful area, for example a parking area accessible by the vehicle through a parking manoeuvre.

The detection apparatus 10 is moreover able to detect the presence, position and dimensions of obstacles, for example, vehicles, barriers, posts, etc., that may be present in a position corresponding to or in the immediate vicinity of the useful area, and generates a signal Si containing a set of information regarding the useful area and the obstacles detected.

In the example illustrated in Figure 1, the detection apparatus 10 comprises at least one radar and/or one or more image-acquisition devices, for example telecameras, which can be installed on one or more outer sides of the vehicle to acquire the images of the areas that surround the vehicle itself and/or to identify the obstacles present in positions corresponding to the areas so as to encode said information in the signal Si.

As regards the processing unit 4, this can comprise an electronic control unit, which receives at input the signal Pa and the signal Si, and processes said signals so as to generate, through the feedback device 9, the resistant torque on the steering wheel 6 during execution of a manoeuvre for parking the vehicle.

In greater detail, the processing unit 4 processes the image of the useful parking area and/or the information regarding the obstacles present in positions corresponding to the area itself in order to be able to verify whether the dimensions of the area are such as to enable parking of the vehicle.

If this is the case, i.e., if the useful surface of the area calculated is sufficient to accommodate the vehicle, the processing unit 4 determines, as a function of the position, and/or of the dimensions of the obstacles and/or of the initial position and/or of the dimensions of the vehicle, an ideal reference path to be suggested to the driver during the manoeuvre for parking the vehicle.

In the case in point, the ideal path can comprise a sequence of ideal steering angles, i.e., of ones which are necessary for the vehicle to follow the ideal path and which should consequently be set by the driver via the steering wheel 6 during execution of the manoeuvre.

During the entire parking manoeuvre, the processing unit 4 compares the real path of the vehicle with the calculated ideal path, and, according to the deviation between the two paths, generates the physical signal on the steering wheel 6 by supplying a feedback that can be perceived physically by the driver and indicates to him the correctness or otherwise of the manoeuvre that is being made.

In the case in point, as explained in detail hereinafter, the processing unit 4 detects, instant by instant, the "real" steering angle set by the driver, compares the congruence between the latter and the ideal steering angle for the ideal reference path, and, according to the result of said comparison, i.e., of the deviation between the two angles, generates the physical signal on the steering wheel 6 indicating correctness of the manoeuvre.

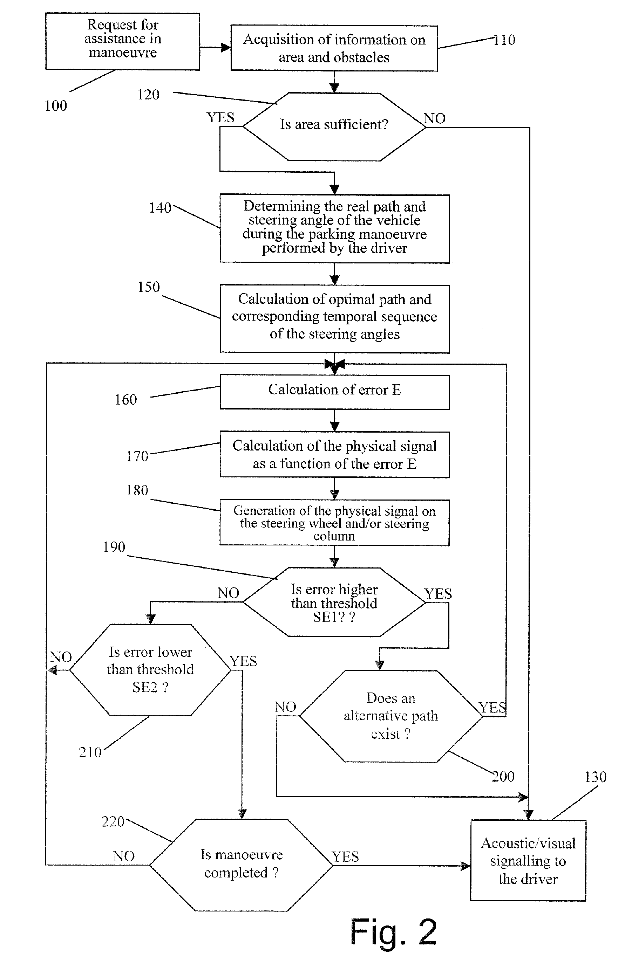

With reference to Figure 2, a method is illustrated for assisting the driver implemented by the device 1.

The method can start when the processing unit 4 detects a request for assisting a manoeuvre for parking the vehicle (Block 100). Said request for assistance can be detected, for example, when the processing unit 4 detects a state of engagement of the reverse gear, or else when it directly receives a control signal for request for assistance, which can be set by the driver through a control device 11, for example a push-button set on board the vehicle.

Following upon the aforesaid request, the processing unit 4 receives the information regarding the useful area of the car park and/or the obstacles (Block 110), and processes it to verify whether the space available in said area is sufficient for positioning the vehicle within the useful area itself (Block 120).

In the case where the space available in said area is insufficient for positioning the vehicle in the area (output NO from Block 120), the device 1 for assisting the driver signals to the driver the condition of impossibility of parking the vehicle within the area (Block 130). In the case in point, said signalling can be generated through a signalling device 12 of a visual type, and/or acoustic type, and/or vocal type, which can comprise, for example, a display panel, and/or an acoustic indicator, and/or a vocal indicator.

If, instead, the useful surface of the area is found to have dimensions sufficient to contain the vehicle (output YES from Block 120), the processing unit 4 detects the displacement of the vehicle and at the same time determines the ideal reference path that the vehicle should cover in order to perform a correct parking manoeuvre.

In particular, the processing unit 4 reconstructs, in the way described in what follows, the real path of the vehicle (Block 140), and determines the path or ideal path to be suggested to the driver during the parking manoeuvre (Block 150), which is characterized by the ideal steering angles that the steering column 5 and/or the steering wheel 6 must assume during the parking manoeuvre.

At this point, the processing unit 4 verifies the deviation of the real path covered by the vehicle with respect to the ideal path associated to the manoeuvre.

In particular, the deviation of the real path from the ideal path can be determined on the basis of an error E corresponding to the distance between the real position of the vehicle with respect to the ideal position that it should assume in the ideal path.

According to a further embodiment, the error E can be determined by the processing unit 4 by calculating the difference between the steering angle controlled by the driver and the ideal steering angle associated to the ideal reference path.

At this point, the processing unit 4 generates, as a function of the deviation, i.e., of the error E, the physical signal on the steering wheel 6 and/or on the steering column 5 (Block 170). In particular, the processing unit 4 calculates a resistant torque as a function of the error E and generates the torque itself on the steering wheel 6 or on the steering column 5, through actuation of the feedback device 9. The resistant torque produced on the steering wheel 6 favours or counters the variation in the steering angle controlled manually by the driver via the steering wheel 6 (Block 180).

In the case in point, the processing unit 4 sets, instant by instant, the intensity and direction of the resistant torque exerted on the steering wheel 6 in such a way as to counter manual rotation of the steering wheel 6 in the case where said rotation determines an increase in the error E.

In particular, the contrast exerted on the steering wheel 6 is detected by the driver through the perception of a greater physical effort when he attempts to turn the steering wheel in a direction that would lead to an increase in the error E, i.e., to an increase in the deviation of the steering angle with respect to the ideal angle, thus determining an increase in the distance of the real path with respect to the ideal one.

If, instead, manual rotation of the steering wheel 6 determines a decrease in the error E, the processing unit 4 reduces, and/or in limit conditions nullifies, the resistant torque exerted on the steering wheel 6 in such a way as not to counter and hence "favour" manual rotation of the steering wheel 6 itself. In particular, the resistant torque exerted on the steering wheel 6 results in a reduction in the effort required of the driver to turn the steering wheel 6 in the direction that is congruous with the steering angle and the ideal path.

In the above description, it should be emphasized that the resistant torque has consequently the function of "prompting" the driver on the steering angle to be set which the steering wheel 6 is to assume during the manoeuvre. Consequently, in the case where the steering action performed by the driver, i.e., the steering angle and the direction of rotation of the steering wheel 6, are compatible with the steering angle and the direction associated to the calculated ideal path, a resistant torque is generated which involves a reduced effort for turning the steering wheel. Instead, if the steering action performed by the driver is not compatible with the steering angle and/or with the direction associated to the pre-set path, a resistant torque is generated that opposes the action of the driver consequently determines a greater effort for turning the steering wheel.

A this point, the processing unit 4 verifies whether the driver is controlling the steering wheel 6 in such a way as to perform a manoeuvre that follows a path completely incongruous with the ideal path. In particular, the processing unit 4 verifies whether the error E correlated to the distance between the paths or the difference between the real and ideal steering angles is or not greater than a maximum error threshold SE1 (Block 190).

If the error E is greater than a maximum error threshold SE1 (output YES from Block 190), a completely wrong manoeuvring condition with respect to the ideal path is identified, and the device 1 for assisting the driver verifies, on the basis of the last position assumed by the vehicle, whether there exists or not a new ideal path that can lead to a correct manoeuvre of the vehicle in the useful area (Block 200). It should be pointed out that in this case the manoeuvre in progress is partially incorrect with respect to the ideal path initially supplied. Consequently, the processing unit 4 processes a new ideal path to be suggested to the driver to enable him to perform a correct manoeuvre of positioning of the vehicle within the area.

In the case where there exists a new possible ideal path (output YES from Block 200), the processing unit 4 reiterates the error calculation E performed in Block 160 calculating the distance between the real path and the new ideal path. Once the error E has been calculated, the processing unit "prompts" the driver on the optimal the steering angle by applying the resistant torque hence reiterating the operations indicated in Blocks 170-190.

In the case where there does not exist any new possible ideal path (output NO from Block 200), the processing unit 4 signals to the driver the condition of impossibility for parking the vehicle within the area (Block 130). It should be pointed out that in this case (Blocks 190-200-130) the manoeuvre in progress is completely incorrect. Consequently, the processing unit 4 evaluates the impossibility for the vehicle to be able to carry out a correct manoeuvre of positioning within the area.

In the case where the error E is lower than the maximum error threshold SE1 (output NO from Block 190), the processing unit 4 verifies whether the error E is lower than a minimum threshold error SE2 (Block 210).

If the error E is greater than the minimum threshold error SE2 (output NO from Block 210), the processing unit 4 reiterates the calculation of the error E committed by the driver envisaged in Block 160, by making the comparison between the steering angle set and the optimal steering angle or by calculating the distance between the paths; it calculates the resistant torque (160); it applies the resistant torque to the steering wheel 6 (Block 180); finally, it implements once again the verification indicated in Block 190.

If, instead, the error E is lower than the minimum threshold error SE2 (output YES from Block 210), the processing unit 4 ascertains that the path obtained through manual rotation of the steering wheel 6 by the driver is substantially coherent with the ideal path in so far as the deviation is reduced.

At this point, the processing unit 4 verifies whether the parking manoeuvre is completed or otherwise (Block 220) and, if it is not (output NO from Block 220), the processing unit 4 implements once again the operations of Blocks 150-201), whereas, if it completed (output YES from Block 202), the processing unit 4 signals through the signalling device 12 the end of the parking operation.

As regards the reconstruction of the displacement, i.e., the manoeuvre of the vehicle, the processing unit 4 is able to implement a function of calculation that reconstructs instant by instant the position of the vehicle with respect to a pre-set fixed reference system within a limited range of displacement, for example less than approximately 20 metres. In particular, the processing unit 4 can receive at input, in addition to the signals Pa and Si described above, also a signal Sb, which encodes the distance d covered by the wheels of the vehicle and is generated, for example, by an odometer 13. The processing unit 4 is then able to process the signals Si and Sb so as to reconstruct, on the basis of a mathematical model of the vehicle, the displacement of the latter.

It should be pointed out that the mathematical model of the vehicle considers both the constructional parameters of the vehicle and the environmental parameters, such as, for example, the external temperature, the road adherence, and the slope of the road, which can be measured and/or calculated through appropriate algorithms of estimation of a known type and consequently not described.

In greater detail, the mathematical model cited above envisages defining the origin of the fixed reference system corresponding, for example, to a Cartesian reference system with two orthogonal axes X and Y, and considering the position of the centroid of the vehicle in the instant when the driver activates the request for assistance in the manoeuvre, assuming that the axis X points in the direction of travel of the vehicle.

In addition, the mathematical model envisages estimation of the following dynamic quantities: the longitudinal and lateral displacement of the vehicle, and the angle and rate of yaw of the vehicle.

As regards determination of the ideal path, it should be added that the device 1 for assisting the driver is capable of calculating it as a function of a point A of start of manoeuvre and a point B of end of manoeuvre, which can be set by the driver or else by the device 1 itself, detecting the position of the vehicle in the instant of reception of the request for assistance and processing the useful parking area.

In the moment when the driver decides to move from point A to point B, the device dynamically supplies the information of error E between the real path of the vehicle and the optimal path, and, in the case where the driver performs the manoeuvre according to a path that departs excessively from the optimal one, the device calculates a new ideal path in order to reach point B. According to a further embodiment, the device 1 for assisting the driver is able to inform the driver of the probable collision of the vehicle with obstacles previously identified in the scenario even though they were momentarily not detected.

The device for assisting the driver described above, in addition to being simple and inexpensive to produce, advantageously suggests to the driver the steering angle to set in order to carry out the optimal parking manoeuvre, consequently reducing the risk of possible collisions of the vehicle with any obstacles that may be present in the parking area itself.

Finally, it is clear that modifications and variations can be made to the device 1 for assisting the driver described and illustrated herein, without thereby departing from the scope of the present invention, as defined in the annexed claims.

## Claims

1. A device (1) for assisting the driver during a manoeuvre for parking a vehicle in a useful area, in which means are provided for controlling steering (2), designed to enable the driver to control the steering angle of the vehicle; said device (1) being **characterized in that** it comprises:
- processing means (4), designed to determine the real path of said vehicle during the parking manoeuvre controlled manually by said driver and to calculate at least one ideal path indicating an optimal parking manoeuvre of said vehicle in said parking area; and
- feedback means (9), designed to generate, according to the deviation of the real path from said ideal path, a signal that transmits to the driver a physical feedback that informs him on the correctness of the parking manoeuvre in progress.

2. The device for assisting the driver according to Claim 1, in which said feedback means (9) are designed to co-operate with said means for controlling steering (2) for transmitting said physical feedback to said driver.

3. The device for assisting the driver according to Claim 1 or Claim 2, in which said physical feedback comprises a resistant torque designed to counter the manual actuation exerted by the driver on said means for controlling steering (2) during the parking manoeuvre in progress.

4. The device for assisting the driver according to Claim 3, in which said deviation is correlated to an error (E) that corresponds to the difference between a real steering angle assumed by the vehicle during said real path and an ideal steering angle correlated to said calculated ideal path.

5. The device for assisting the driver according to Claim 3, in which said deviation is correlated to an error (E) that corresponds to the distance between the position assumed by the vehicle in said real path and the position that should be assumed by the vehicle itself in said calculated ideal path.

6. The device for assisting the driver according to Claim 4 or Claim 5, in which said processing means (4) are designed to calculate said error (E) and drive said feedback means (9) in such a way as to generate said signal as a function of the error (E) itself.

7. The device for assisting the driver according to any one of Claims 4 to 6, in which said processing means (4) verify whether said error (E) satisfies a given relation with a pre-set maximum error threshold (SE1), and process, in the case where said relation is satisfied, an ideal path alternative to said previous calculated ideal path.

8. The device for assisting the driver according to any one of the preceding claims, in which said means for controlling steering (2) comprise a steering column (5) and a steering wheel (6), which is connected to said steering column (5) and can be actuated manually by said driver.

9. The device for assisting the driver according to Claim 8, in which said feedback means (9) are designed to generate, according to said error (E), a signal that transmits on said steering wheel (6) and/or on said steering column (5) a physical feedback that can be perceived by the driver during manual actuation of the steering wheel (6) itself.

10. The device for assisting the driver according to Claim 9, in which said feedback means (9) are designed to generate, according to said error (E), a resistant torque on said steering wheel (6) and/or on said steering column (5); said torque having an intensity and a direction such as to oppose manual rotation of the steering wheel (6) made by the driver which determines an increase in said error (E).

11. The device for assisting the driver according to Claim 9 or Claim 10, in which said feedback means (9) are designed to generate, according to said error (E), a resistant torque on said steering wheel (6), designed to favour manual rotation of the steering wheel (6) made by the driver which determines a reduction in said error (E).

12. A method for assisting the driver during the manoeuvre for parking a vehicle in a useful area, in which means are provided for controlling steering (2), designed to enable the driver to control the steering angle of the vehicle; said method comprising the steps of:
- determining (140) the real path of said vehicle during the parking manoeuvre performed by the driver through said steering means;
- calculating (150) at least one ideal path indicating an optimal parking manoeuvre of said vehicle in said useful area; and
- generating (180), according to the deviation of the real path from said ideal path, a signal that transmits to the driver a physical feedback that informs him on the correctness of the parking manoeuvre in progress.

13. The method according to Claim 12, in which said signal is transmitted to the driver through said means for controlling steering (2).

14. The method according to Claim 12 or Claim 13, in which said physical feedback comprises a resistant torque designed to counter the manual actuation exerted by the driver on said means for controlling steering (2) during the parking manoeuvre in progress.

15. The method according to Claim 14, in which said deviation is correlated to an error (E) that corresponds to the difference between a real steering angle assumed by the vehicle during said real path, and an ideal steering angle correlated to said calculated ideal path.

16. The method according to Claim 14, in which said deviation is correlated to an error (E) that corresponds to the distance between the position assumed by the vehicle in said real path, and the position that should be assumed by the vehicle itself in said calculated ideal path.

17. The method according to Claim 16, comprising the step of controllling said feedback means (9) in such a way as to generate said signal as a function of said error (E).

18. The method according to Claim 17, comprising the step of verifying whether said error (E) satisfies a given relation with a pre-set maximum error threshold (SE1), and processing, in the case where said relation is satisfied, an ideal path alternative to said calculated ideal path.

19. The method according to any one of Claims 12 to 18, in which said means for controlling steering (2) comprise a steering wheel (6) and a steering column (5); said method comprising the step of transmitting said signal to said driver through said steering column (5) and/or said steering wheel (6).

20. The method according to Claim 19, comprising the step of generating, as a function of said error (E), a resistant torque on said steering wheel (6) and/or on said steering column (5) that opposes the manual rotation of the steering wheel (6) by the driver which generates an increase in the error (E) itself.

21. The method according to Claim 19 or Claim 20, comprising the step of generating, according to said error (E) a resistant torque on said steering wheel (6) and/or on said steering column (5) that favours manual rotation of the steering wheel (6) by the driver which generates a reduction in the error (E) itself.
